# EUROPEAN PATENT APPLICATION

(11) **EP 2 068 467 A1**
(43) Date of publication of application: **10.06.2009**
(21) Application number: 07291472.4
(22) Date of filing: 07.12.2007
(51) Int. Cl.: H04B 10/08

(54) **Dynamic network with soft-reaction on soft-fallures**

(71) Applicant: Alcatel Lucent, 75008 Paris (FR)
(72) Inventor: Bülow, Henning, 70806 Kornwestheim (DE)
(74) Representative: MERH-IP Matias Erny Reichl Hoffmann

(57) **Abstract**

The invention relates to channel protection switching and restoration in automatically switched transport networks. Upon detection of an increased outage probability of a transmission channel, the control plane reacts by modifying the transmission parameters, such as -inter alia - the bit rate, of the transmission channel, in order to allow the usage of the transmission channel with modified transmission parameters. In contrary to prior art, the transmission capacity of the impaired transmission channel can be - at least partially - maintained.

## Description

The invention relates to channel protection switching and restoration in automatically switched transport networks.

In optical transmission systems, optical signals are sent over an optical fiber from a transmitter to a receiver, both also referred to as transponders. In order to allow for the transmission of multiple channels over the same fiber, multiplexing techniques, such as wavelength division multiplexing (WDM), are used. This requires a wavelength division multiplexer in the transmitting equipment and a wavelength division de-multiplexer (essentially a spectrometer) in the receiving equipment. Using available WDM technology, the bandwidth of a fiber can be divided into as many as 80 channels to support a combined bit rate of 10Gb/s, 40Gb/s and 100Gb/s.

In order to provide high performance communication channels with low bit-error rates, physical layer protocols such as Sonet/SDH or Ethernet physical layer are used. These protocols, however, assume the underlying physical medium, i.e. the optical fiber, to have perfect transmission characteristics, an assumption that does not hold for increasing bit rates and transmission distances. Furthermore, the fault management of these protocols is adapted to so called hard-failures, such as fiber cuts and equipment outages, while they cannot handle gradual service degradation.

For modem optical fibers, the maximum transmission distance and bandwidth is mostly limited not by attenuation but by dispersion, or spreading of optical pulses as they travel along the fiber. Dispersion in optical fibers is caused by a variety of factors. Intermodal dispersion, caused by the different axial speeds of different transverse modes, limits the performance of multi-mode fiber. Because single-mode fiber supports only one transverse mode, intermodal dispersion is eliminated. In single-mode fiber, performance is primarily limited by chromatic dispersion (also called group velocity dispersion), which occurs because the refraction index of the glass varies slightly depending on the wavelength of the optical signal, and due to the fact that the optical signal emitted from real optical transmitters necessarily have a nonzero spectral width. Polarization mode dispersion (PMD), another source of limitation, occurs because although the single-mode fiber can sustain only one transverse mode, it can carry this mode with two different polarizations, and slight imperfections or distortions in the fiber can alter the propagation velocities for the two polarizations. This phenomenon is called fiber birefringence and can be partially counteracted by polarization-maintaining optical fiber. Overall, however, dispersion limits the bandwidth of the fiber because the spreading of an optical pulse limits the rate that pulses can follow one another on the fiber and still be distinguishable at the receiver.

Even though some dispersion types, notably chromatic dispersion, can be partially compensated, PMD is an issue, as apart from being difficult to compensate, it also changes over time due to mechanical vibrations and variations in temperature. Consequently, transmission performance of an optical fiber channel needs to be constantly monitored, as a change in PMD can deteriorate the bit-error rate of a transmission channel, i.e. increase its outage probability (often beyond 10⁻⁵), and finally lead to a failure of the channel. In contrary to hard-failures, encountered due to fiber cuts or equipment outages, such failures are usually referred to as soft-failures. Soft-failures are usually not permanent and often only affect some of the channels in a WDM network, therefore continuous optical performance monitoring is required. Other causes for soft-failures could be Raman effect induced cross-gain modulation between wavelength channels in transmission fibers and/or transient gain modulation effects, such as over and under shoots, in optical amplifiers, such as Erbium doped fiber amplifiers.

Optical performance monitoring is used for managing high capacity WDM or dense WDM (DWDM) optical transmission and switching systems. Optical performance monitoring involves assessing the quality of a transmission channel by measuring its optical characteristics or physical channel parameters. It is a mechanism to improve the control of data transmission and the fault management of the physical layer in optical transmission systems. In optical communications, typical roles for optical performance monitoring include ensuring correct switching in reconfigurable optical add-drop multiplexers (ROADMs), setting levels for dynamic equalization of the gain of optical amplifiers, and providing system alarms and error warning for lost or out of specification optical channels. For measuring the actual PMD of a transmission channel, a possible realization for optical performance monitoring is for example a wavelength scanning polarimeter which scans all wavelength channels and determines the respective differential group delay (DGD) which can be used to describe the PMD. The optical component used for this purpose in WDM networks is known as optical performance monitor (OPM) or optical channel monitor (OCM).

In case a soft-failure of a transmission channel is detected, it is signaled to the control plane of the transmission network. The control plane is concerned with drawing an overall network map and with making sure that the traffic is routed through the network. In case of channel failures, the control plane will select an alternative route through the network and switch-over the affected traffic to this alternative route. This concept allows the implementation of Automatically Switched Transport Networks (ASTN) or Automatically Switched Optical Networks (ASON). The control plane makes use of protocols such as the generalized multiprotocol label switching (GMPLS).

Prior art control plane protection methods, such as described in J.Zweck & C.R. Menyuk, "Detection and Mitigation of Soft Failure due to Polarization-Mode Dispersion in Optical Networks", OFC 2006, detect PMD impaired wavelength channels, also referred to as transmission channels, via optical channel monitors distributed within the network. In case a soft-failure is detected, the respective wavelength channel is taken out of service and the traffic is then re-routed around the said dead wavelength channel.

The complete decommissioning of a wavelength channel in a fiber, which could also be seen as a "hard"-reaction to a "soft"-failure, means, however, a significant loss of network resources, which has to be fully absorbed by the remaining network. Thus, there is a need to improve the efficiency of control plane responses to soft-failures in the transmission network.

The present invention abolishes the need for totally removing a wavelength channel affected by a soft-failure and to keep the channel, at least partially, in service. In other words, according to an aspect of the invention, a soft-failure of a wavelength channels triggers a soft-reaction of the control plane. According to an aspect of the invention, an optical transmission channel between a first network element and a second network element is controlled, wherein in a first step physical channel parameters of the optical transmission channel are collected. By way of example, an optical transmission channel may be a complete optical fiber, a channel of a DWDM transmission system and/or a wavelength or lambda. Examples for physical channel parameters are the parameter settings of equalizers at the receiver side or parameters measured by an optical performance monitor. In a second step it is determined, based on the collected physical channel parameters, whether the optical transmission channel has an increased outage probability. A possible measure for an increased outage probability may be an outage probability of 10⁻⁵ or above. If the outage probability is increased, then, in a third step, the signal that is transmitted over the optical transmission channel is changed. Examples for changing the transmitted signal may be to change the physical characteristics of the transmitted signal, e.g. the bit-rate, or to change the logical characteristics of the transmitted signal, e.g. QoS requirements of the payload. In the latter case, a different signal having lower QoS requirements may be selected for transmission via the transmission channel having the increased outage probability (e.g. exceeding a threshold).

It should be noted, that the present invention proposes to continue to use the impaired transmission channel with a changed signal. This way, impaired network resources may be, at least partially preserved. This is fundamentally different from prior art methods, which propose to remove an impaired transmission channel entirely from the network, thereby removing the complete network resource.

According to an aspect of the invention, a channel affected by a soft-failure is not completely de-commissioned, due to the fact that in many cases the underlying physical root cause of the soft-failure, such as polarization mode dispersion within the optical fiber, does only deteriorate, but not completely eliminate, the transmission capabilities of the wavelength channel.

According to another aspect of the invention, a signal with a lower capacity is transmitted over the impaired wavelength channel by changing the bit rate of the transmitter, so that the outage probability, possibility caused by PMD, decreases again to a value that is sufficiently high for a reliable data transmission. By way of example, a 40Gb/s channel could be downgraded to a 20Gb/s channel, thus allowing to conserve 20Gb/s, i.e. 50%, transmission capacity within the network. Once the soft failure of the wavelength channel is resolved, such a downgrade may be reversed, in order to make available again the full transmission capacity.

According to another aspect of the invention, the modulation levels are increased and with that the symbol rates are reduced. This could be done if the optical signal to noise ratio (OSNR) of the wavelength channel is sufficient. By way of example, a differential phase shift keying (DPSK) modulation may be increased to a differential quadrature phase shift keying (DQPSK) modulation, thus increasing from a binary to a quaternary modulation. At the same time, the symbol rate is reduced by a factor two. In more general terms, the modulation type and the related symbol rate may be adapted to the condition of the wavelength channel, in order to maximize the momentary transmission rate. Once the soft-failure of the wavelength channel is resolved, the default modulation type may be re-used.

According to another aspect of the invention, an impaired wavelength channel could be labeled as a channel with higher outage probability. Such a higher outage probability could be used to indicate a lower transmission quality of the respective wavelength channel. The control plane could use this information and assign low priority traffic (e.g. traffic with a low quality of service, QoS, requirement) to be transmitted over the said wavelength channel. Consequently, the control plane may be able to maintain and to assign paths with different quality characteristics and/or outage probability. Once the soft-failure of the wavelength channel is resolved, such a labeling of the transmission channel may be removed, in order to make the channel available again for all traffic types.

According to another aspect of the invention, the transmitter/receivers and the integrated equalizers or compensators provide channel information (such as chromatic distortion and/or PMD) to the control plane. Possibly additional optical channel monitors, also referred to as optical performance monitors, may be distributed along the optical link, in order to measure the signal quality at the respective positions and to determine channel information, such as PMD. The OPM may then also provide this intermediate channel information to the control plane. Based on this plurality of channel information and based on the overall network situation, the control plane can make a decision, on how to best make use of the impaired wavelength channel.

In more general terms, information on the physical channel parameters of a transmission channel is provided to the control plane by a plurality of sources, such as transmitters/receivers and optical performance monitors. Based on the said information, the control plane detects transmission channels which are subjected to soft-failures. Taking into account the characteristics of the soft-failures and the overall network and traffic situation, the control plane may take soft-decisions with respect to the transmission parameters of a transmission channel. Possible soft-decisions may comprise - inter alia - a reduction of the channel bit-rate, a modification of the symbol rate, a modification of the modulation format and/or the labeling of the said transmission channel with a low QoS indicator. Possible transmission parameters may be - inter alia - the bit-rate, the symbol rate, the modulation format and/or a QoS indicator of the transmission channel.

According to another aspect of the invention, a soft-failure may be related to an increased outage probability. For the detection of a soft-failure, it may be beneficial to define a threshold for an acceptable level of outage probability. If the outage probability increases beyond the said threshold level, then a soft-failure is detected.

According to another aspect of the invention, an optical network management method for controlling an optical transmission channel between a first network element and a second network element is disclosed. In a first step such a method collects a plurality of physical channel parameters of the optical transmission channel. The physical channel parameters may originate from the equalizers at the receiver side and/or from optical performance monitors placed within the network. In a second step, the method determines, based on the collected physical channel parameters, whether the optical transmission channel has an increased outage probability. Such increased outage probability may be due to polarization mode dispersion within the optical fiber. As a reaction to the increased outage probability and possibly once the outage probability has increased beyond a predefined threshold level, the signal that is transmitted over the optical transmission channel is changed.

According to another aspect of the invention, the soft-decision may comprise changing the signal that is transmitted over the optical transmission channel, whereas the changing of the signal may comprise modifications of the physical characteristics of the signal, such as - inter alia - the bit-rate, the symbol rate and the modulation format, and/ or it may comprise modifications of the logical characteristics of the signal, such as - inter alia - the QoS requirements of the signal.

According to another aspect of the invention, some of the soft-decisions may be implemented upon existing equipment by software upgrade. By way of example, the labeling of channels with low QoS indicators may be implemented within the software of the control plane. On the other hand, some soft-decisions may require hardware extensions. By way of example, in case the symbol rate and/or the modulation format of a transmitter/receivers needs to be changed, then switchable symbol rate / modulation format transmitters and receivers need to be available within the network.

The advantages and features of the invention will become apparent from the following description of preferred embodiments. The present invention is described in the following by referring to exemplary embodiments illustrated schematically in the accompanying figure, wherein

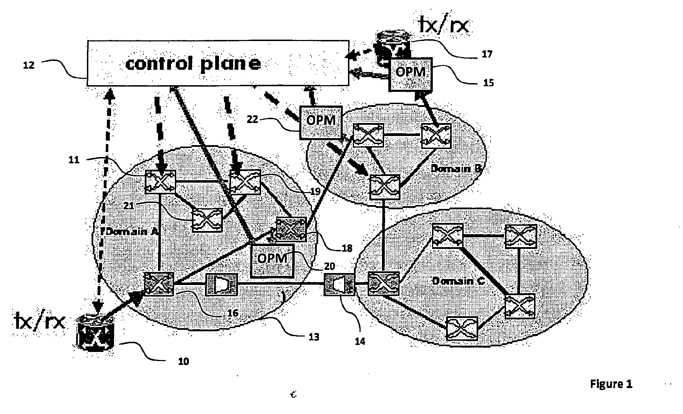

Fig. 1 illustrates an embodiment of a optical transmission network with a control plane.

Figure 1 shows an embodiment of an optical transmission network with an exemplary three optical domains 13 A, B and C. The network comprises a plurality of remote configurable add-drop multiplexers (ROADM) 11, 16, 18,19 and 21 in domain 13 A, which allow switching within an optical network on a wavelength level. Using ROADMs, wavelength channels can be switched according to the traffic routing needs and ROADMs form the basis for the implementation of automatically switched optical networks. In the present example, a wavelength channel is switched from the transmitter/receiver 10 to the transmitter/receiver 17. The path of the wavelength channel goes through a plurality of ROADMs and possibly also conventional WDM equipment 14.

The control plane 12 gathers information from the transmitters/receivers 10, 17 and from a plurality of optical performance monitors 15, 20, 22. This information about the wavelength channel condition may include chromatic distortion, polarization mode dispersion, differential group delay and others. The control plane 12 processes this information and makes decisions on how to route the overall traffic through the network. In particular, it may detect that a path is experiencing an increased outage probability, resulting in a soft-failure. By way of example, a soft-failure may have been detected by one of the methods described within the above mentioned article by J. Zweck and C.R. Menyuk. Another method of detecting a soft-failure based on PMD has been disclosed in the European patent application EP 1746754, included by reference. The method models a transmission channel as a sequence of low PMD sections (e.g. buried fiber) and high PMD sections (e.g. joints). Measuring the DGD for the different sections, in particular the high PMD sections, yields estimates for the PMD of the complete transmission channel, which are more accurate than estimates based on Maxwell PMD statistics.

In an example, a wavelength channel between ROADM 16 and 18 has a soft-failure. Depending on the extent of the soft-failure and on the overall network and/or traffic situation, the control plane may decide to optimize the throughput of the said channel by modifying the modulation and symbol rate. Alternatively, the bit-rate of the channel may be reduced to a level that ensures a reasonable outage probability. In another embodiment, it may be beneficial to label the said channel as a low quality channel and use it for the transmission of low QoS traffic.

In another example, a 40Gb/s signal is sent from the transmitter 10 to the receiver 17 via the ROADMs 16 and 18. It is detected by the OPM 20 that the transmission channel between the two ROADMs 16 and 18 is impaired by PMD. This information is passed to the control plane 12. The control plane 12 may decide that the impaired transmission channel is only capable of reliably transporting 20Gb/s.

Consequently, the control plane 12 may decide to re-route the 40Gb/s signal from the ROADMs 16 to 18 via the ROADMs 11 and 19 and instruct the involved ROADMs accordingly. For such a decision, also the overall network situation needs to be considered. Furthermore, the control plane 12 could decide to route a 20Gb/s signal over the impaired transmission channel. In another embodiment, the control plane 12 may instruct the transmitter 10 to reduce its bit-rate and reduce the 40Gb/s to a 20Gb/s signal. In a similar manner, also the settings at the receiver 17 would need to be changed.

In another example, the control plane 12 may decide to use the impaired transmission channel between ROADMs 16 and 18 and to label it with a lower QoS indicator. If the initial 40Gb/s signal transmitted via the impaired transmission channel has higher QoS requirements, then the control plane 12 will decide to re-route this signal as explained above. In order to maintain usage of the impaired transmission channel, the control plane 12 may decide to re-route signals with QoS requirements that meet the QoS characteristics of the impaired transmission channel onto the said transmission channel.

Using the present invention it is possible to avoid the complete loss of wavelength channels which are impaired by a soft-failure. This way, network resources can be kept at a maximum level and, consequently, network congestion is reduced. Furthermore, some of the presented soft-reactions may be implemented purely by adding software to the network elements and/or control plane equipment, thus making it possible to simply upgrade existing systems.

This written description uses examples to disclose the invention, including the best mode, and also to enable any person skilled in the art to make and use the invention. While the invention has been described in terms of various specific embodiments, those skilled in the art will recognise that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art.

## Claims

1. An optical network management method for controlling an optical transmission channel between a first network element and a second network element, the method comprising the steps:
- collecting physical channel parameters of the optical transmission channel;
- determining, based on the collected physical channel parameters, whether the optical transmission channel has an increased outage probability; and
- changing the signal that is transmitted over the optical transmission channel if the outage probability is increased.

2. Method of claim 1, wherein the physical channel parameters are provided to an optical network control plane which determines whether and how the transmitted signals are changed.

3. Method of claim 1, wherein the changing step includes modifying transmission parameters of the optical transmission channel such that the outage probability of the transmission channel drops to an acceptable level.

4. Method of claim 1, wherein the changing step includes selecting traffic with lower quality of service requirements for transmission over the optical transmission channel.

5. Method according to claim 1, including determining polarization mode dispersion of the optical fiber used in the transmission channel based on the collected physical channel parameters.

6. A control plane for use in an optical network, and for controlling an optical transmission channel between a first network element and a second network element, the control plane comprising:
- means for receiving physical channel parameters of the optical transmission channel;
- means for determining, based on the received physical channel parameters, whether the optical transmission channel has an increased outage probability; and
- means for changing the signal that is transmitted over the optical transmission channel depending on the result of the determination.

7. Control plane according to claim 6, wherein the means for receiving physical channel parameters are configured to receive parameter settings of equalizers at the receiver end of the optical channel and/or parameters collected by at least one optical performance monitor arranged in the optical network.

8. Control plane according to claim 6, wherein the means for changing the transmitted signal comprise means to instruct a transmitter in the first network element to change transmission parameters comprising at least one of bit-rate, symbol rate and modulation format of the transmitted signal.

9. Control plane according to claim 6, wherein the means for changing the transmitted signal comprise means to route lower priority traffic which can tolerate the increased outage probability over the impaired optical transmission channel.

10. An automatically switched optical network comprising optical network elements, a control plane for controlling an optical transmission channel between a first network element and a second network element, and an optical performance monitor for measuring physical channel parameters of the optical transmission channel, wherein
the control plane determines, based on the measured physical channel parameters, whether the optical transmission channel has an increased outage probability, and in response thereon changes the signal that is transmitted over the optical transmission channel.
